(19) Europäisches Patentamt
European Patent Office
Office européen des brevets

(11) Veröffentlichungsnummer: **0 200 843**
**B1**

(12) **EUROPÄISCHE PATENTSCHRIFT**

(45) Veröffentlichungstag der Patentschrift: **22.06.88**

(21) Anmeldenummer: **85810509.1**

(22) Anmeldetag: **04.11.85**

(51) Int. Cl.⁴: **D 06 P 1/642**, D 06 P 5/02, D 06 M 13/50, D 06 P 3/24, D 06 P 3/82

# (54) Verfahren zur fotochemischen Stabilisierung von ungefärbtem und gefärbtem Polyamidfasermaterial und dessen Mischungen.

(30) Priorität: **09.05.85 CH 1975/85**

(43) Veröffentlichungstag der Anmeldung: **12.11.86 Patentblatt 86/46**

(45) Bekanntmachung des Hinweises auf die Patenterteilung: **22.06.88 Patentblatt 88/25**

(84) Benannte Vertragsstaaten: **BE CH DE FR GB IT LI NL**

(56) Entgegenhaltungen:
**EP - A - 0 051 188**
**EP - A - 0 113 856**
**DE - A - 2 625 386**
**DE - A - 3 326 640**
**GB - A - 1 321 645**

(73) Patentinhaber: **CIBA-GEIGY AG, Klybeckstrasse 141, CH-4002 Basel (CH)**

(72) Erfinder: **Reinert, Gerhard, Dr., Weiherweg 1/7, CH-4123 Allschwil (CH)**
Erfinder: **Huber-Emden, Helmut, Dr., Sandgrubenstrasse 15, CH-4124 Schönenbuch (CH)**
Erfinder: **Back, Gerhard, Dr., Hammerstrasse 5, D-7850 Lörrach (DE)**

**EP 0 200 843 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur fotochemischen Stabilisierung von ungefärbtem und gefärbtem Polyamidfasermaterial und dessen Mischungen mit anderen Fasern, indem man dieses Material mit wasserunlöslichen Kupferkomplexen von Bisazomethinen behandelt, die z.B. aus gegebenenfalls substituierten Salicylaldehyden und aliphatischen Diaminen hergestellt werden.

Die Verwendung von Kupfersalzen, wie z.B. Kupfersulfat, zur Verbesserung der Lichtechtheit von Färbungen auf Polyamidfasern mit Metallkomplexfarbstoffen ist allgemein bekannt; verwiesen wird auf den Artikel von I.B. HANES in ADR 3 (1980), Seiten 19 und 20. Anorganische oder auch organische Kupfersalze haben jedoch vielfach den Nachteil, dass sie nur ungenügend und ungleichmässig auf die Polyamidfaser aufziehen und daher in hohen Konzentrationen verwendet werden müssen, um den gewünschten Effekt zu erzielen. Normalerweise können sie nur als Nachbehandlung und in Diskontinueverfahren eingesetzt werden.

In der EP-A 51 188 wird empfohlen, zur Verbesserung der Lichtechtheit von Polyamidfärbungen das Polyamidmaterial vor, während und nach der Färbung mit Kupferkomplexen von Bisazomethinen zu behandeln, die z.B. aus gegebenenfalls substituierten Salicylaldehyden und aromatischen Diaminen hergestellt werden.

Solche Lichtechtheitsverbesserer weisen jedoch eine unerwünschte Eigenfarbe und eine nicht ganz ausreichende Hydrolysen- und Säurestabilität auf, wie in der EP-A 113 856 des gleichen Anmelders zutreffend angegeben ist.

Es wurde nun gefunden, dass überraschenderweise Kupferkomplexe von Bisazomethinen, die sich z.B. von gegebenenfalls substituierten Salicylaldehyden und aliphatischen Diaminen ableiten, die oben erwähnten Nachteile nicht aufweisen. Diese Komplexe weisen in den angewandten Konzentrationen keine unerwünschte Eigenfarbe auf und sind ausserdem in der Säurestabilität und Hydrolysestabilität den nächstvergleichbaren Komplexen gemäss EP-A 51 188 überlegen. Zudem schmutzen sie das Fasermaterial weniger an als die nächstvergleichbaren Komplexe.

Gegenstand vorliegender Erfindung ist somit ein Verfahren zur fotochemischen Stabilisierung von ungefärbtem und gefärbtem synthetischem Polyamidfasermaterial, oder dessen Mischungen mit anderen Fasern, das dadurch gekennzeichnet ist, dass man das Polyamidfasermaterial mit einer faseraffinen, organischen Kupferkomplexverbindung der Formel

(1) 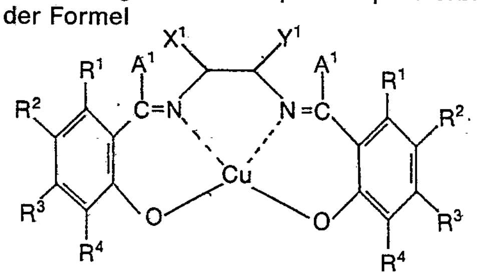

behandelt, worin

$A^1$ Wasserstoff oder $C_1$–$C_3$-Alkyl,

$R^1$, $R^2$, $R^3$ und $R^4$ unabhängig voneinander je Wasserstoff, Halogen, Hydroxy, Hydroxyalkyl, Alkyl, Alkoxy, Alkoxyalkoxy, Alkoxyalkoxyalkoxy, Carboxymethoxy, Alkylamino, Dialkylamino, $-SO_2NH_2$, $-SO_2NHR$ oder $-SO_2NR_2$ bedeuten, wobei R Alkyl oder Alkoxyalkyl ist und wobei unter Alkyl oder Alkoxy jeweils Gruppen mit 1–4 C-Atomen zu verstehen sind, oder

$R^1$ und $R^2$ oder $R^2$ und $R^3$ oder $R^3$ und $R^4$ zusammen mit den C-Atomen, an die sie gebunden sind, einen ankondensierten Benzolrest bilden,

$X^1$ und $Y^1$ unabhängig voneinander je Wasserstoff, $C_1$–$C_4$-Alkyl oder einen aromatischen Rest bedeuten oder $X^1$ und $Y^1$ zusammen mit den C-Atomen, an die sie gebunden sind, einen cycloaliphatischen Rest mit 5–7 C-Atomen bilden.

Das nach dem vorliegenden Verfahren photochemisch stabilisierte Polyamidfasermaterial oder dessen Mischungen mit anderen Fasern sowie die Verbindungen der Formel (I), sofern sie an sich neu sind, bilden weitere Gegenstände der vorliegenden Erfindung.

Im allgemeinen sind die Kupferkomplexverbindungen der Formel (I) wasserunlöslich, sofern sie keine Carboxymethoxyreste ($-O-CH_2-COOH$) oder deren Salze aufweisen.

$A^I$ steht vorzugsweise für n-Propyl, Ethyl, vor allem Methyl oder insbesondere Wasserstoff. Bei den Resten $R^1$–$R^4$ bedeutet Halogen Fluor, Brom oder insbesondere Chlor. Geeignete Alkylreste sind z.B. Methyl, Ethyl, N-Propyl, Isopropyl oder tert.-Butyl, Hydroxyalkylreste sind z.B. Hydroxyethyl und Alkoxyreste sind z.B. Methoxy, Ethoxy oder Butoxy. Als Beispiel eines Alkoxyalkoxyrestes sei Methoxyethoxy (auch 2-Oxabutyloxy genannt) ($-O-CH_2-CH_2-O-CH_3$), eines Alkoxyalkoxyalkoxyrestes sei Ethoxyethoxyethoxy (auch 3,6-Dioxaoctyloxy genannt) ($-O-CH_2-CH_2-O-CH_2-CH_2-O-CH_2-CH_3$) und eines Dialkylaminorestes sei Diethylamino erwähnt. Als geeigneter Sulfonamidrest sind vor allem der Sulfonamid-, N-Methylsulfonamid- und N,N-Dimethylsulfonamidrest zu nennen.

Zwei benachbarte Reste $R^1$–$R^4$ können auch zusammen mit den C-Atomen, an die sie gebunden sind, einen ankondensierten Benzolrest bilden. Solche Bisazomethine leiten sich ab von 2-Hydroxy-1-naphthaldehyd, 3-Hydroxy-2-naphthaldehyd oder 1-Hydroxy-2-naphthaldehyd.

Die Reste X und Y können unabhängig voneinander $C_1$–$C_4$-Alkyl darstellen, z.B. Methyl, Ethyl, n-Propyl, Isopropyl, n-Butyl, Isobutyl, sek.-Butyl und tert.-Butyl. Als aromatische Reste kommen für X und Y vor allem gegebenenfalls substituierte Naphthyl- und insbesondere Phenylreste in Betracht. Ausserdem können X und Y zu einem cycloaliphatischen Rest z.B. Cyclohexylen, Cyclopentylen oder Cycloheptylen verknüpft sein.

Vorzugsweise bedeuten $R^1$–$R^4$ unabhängig voneinander je Wasserstoff, Chlor, Brom, Methyl, Ethyl, Butyl, Methoxy, Ethoxy, Methoxyethoxy, Ethoxyethoxyethoxy oder Diethylamino oder $R^1$

und $R^2$ bilden zusammen einen ankondensierten Benzolrest.

Von den Substituenten $X^1$ und $Y^1$ ist vorzugsweise einer Wasserstoff und der andere Wasserstoff, Methyl, Ethyl oder Phenyl oder $X^1$ und $Y^1$ bilden zusammen einen Cyclohexylenrest.

Bevorzugt gelangen wasserunlösliche Kupferkomplexe der Formel

(2) 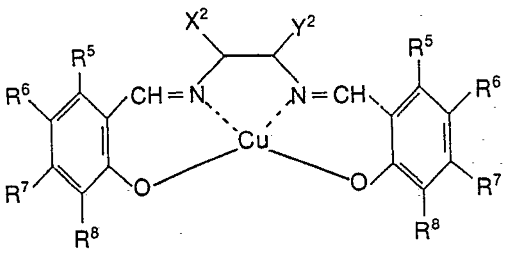

zum Einsatz, worin $R^5$–$R^8$ unabhängig voneinander je Wasserstoff, Hydroxy, Brom, Methyl, tert. Butyl, Methoxy, Methoxyethoxy, Ethoxyethoxyethoxy oder Diäthylamino, $X^2$ Wasserstoff, Methyl, Ethyl oder Phenyl und $Y^2$ Wasserstoff bedeuten oder $R^5$ und $R^6$ zusammen einen ankondensierten Benzolrest oder $X^2$ und $Y^2$ zusammen einen Cyclohexylenrest bilden.

Von besonderem Interesse sind Verbindungen der Formel

(3) 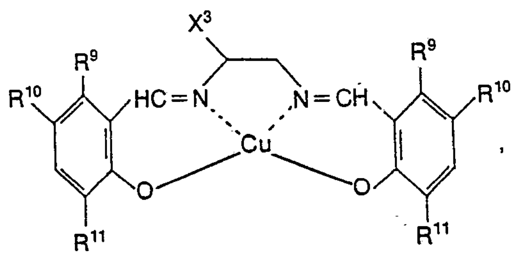 ,

worin

$R^9$, $R^{10}$ und $R^{11}$ unabhängig voneinander je Wasserstoff, Chlor, Brom, Methyl oder Methoxy bedeuten und worin $R^9$ und $R^{10}$ zusammen einen ankondensierten Benzolring bilden und

$X^3$ Wasserstoff, Methyl, Ethyl oder Phenyl ist.

Im Vordergrund des Interesses stehen indessen Verbindungen der Formel (3), worin $R^9$, $R^{10}$, $R^{11}$ und $X^3$ für Wasserstoff stehen.

Die Verbindungen der Formel (I) stellen zum Teil an sich aus z.B. Beilstein und Chem. Abstr. bekannte Verbindungen und zum Teil an sich neue Verbindungen dar. So sind Verbindungen der Formel (I), worin $R^3$ Methyl und $A^1$, $R^1$, $R^2$, $R^4$, $X^1$ und $X^2$ Wasserstoff; $R^1$ und $R^4$ Methyl und $A^1$, $R^2$, $R^3$, $X^1$ und $Y^1$ Wasserstoff; $R^2$ und $R^4$ Chlor und $A^1$, $R^1$, $R^3$, $X^1$ und $Y^1$ Wasserstoff; $R^4$ Methoxy und $A^1$, $R^4$, $R^2$, $R^3$, $X^1$ und $Y^1$ Wasserstoff; $R^3$ Methoxy, Methoxyethoxy, Ethoxyethoxyethoxy oder Diethylamino und $A^1$, $R^1$, $R^2$, $R^4$, $X^1$ und $Y^1$ Wasserstoff; $R^2$ Methoxyethoxy oder Ethoxyethoxyethoxy und $A^1$, $R^1$, $R^3$, $R^4$, $X^1$ und $Y^1$ Wasserstoff; $R^2$ und $R^3$ Methoxyethoxy oder Ethoxyethoxyethoxy und $A^1$, $R^1$, $R^4$, $X^1$ und $Y^1$ Wasserstoff, oder einer der beiden Substituenten $R^3$ Hydroxyl und der andere Methoxyethoxy oder Ethoxyethoxyethoxy und $A^1$, $R^1$, $R^2$, $R^4$, $X^1$ und $Y^1$ Wasserstoff bedeuten, an sich neu.

Die Verbindungen der Formel (1) erhält man auf an sich bekannte Weise durch Umsetzung von 2 Äquivalenten der entsprechenden o-Hydroxyaldehyde mit 1 Äquivalent des entsprechenden Diamins zur entsprechenden Schiffschen Base und anschliessende Metallisierung mit Kupfersalzen. Man kann aber auch zunächst den Kupferkomplex des o-Hydroxyaldehyds bilden und diesen anschliessend mit einem entsprechenden Diamin zum Kupferkomplex des Biazomethins der Formel (1) umsetzen.

Es ist auch möglich, ohne Isolierung der Zwischenprodukte das o-Hydroxybenzaldehyd, das Diamin und das Kupersalz in einem einzigen Schritt im sogenannten Eintopfverfahren direkt zur Verbindung der Formel (1) umzusetzen, oder Substituenten, insbesondere Hydroxylgruppen, nach beendeter Herstellung der Verbindung der Formel (1) nachträglich durch eine weitere Umsetzung abzuändern, z.B. zu alkylieren. Diese 4 Herstellungsmethoden sind von Pfeiffer in Liebigs Annalen der Chemie, Bd. 503, S. 84–130 (1933) beschrieben.

Die Kupferkomplexe der Formel (1) werden zweckmässigerweise aus wässrigem Bad appliziert, wobei diese vorteilhaft in einer Menge eingesetzt werden, dass auf 1 g Polyamidfasermaterial 5 bis 200 µg, insbesondere 10 bis 100 µg Kupfer kommen.

Die Verbindungen der Formel (1) werden zweckmässig als fein verteilte Dispersionen eingesetzt, die durch Mahlen in Gegenwart üblicher Dispergiermittel erhalten werden.

Werden die Kupferkomplexe zur Stabilisierung von gefärbtem Material verwendet, so kann das Fasermaterial vor, während oder nach der Färbung mit Kupferkomplex behandelt werden. Zweckmässigerweise wird der Kupferkomplex direkt den Färbe- oder Klotzflotten zugesetzt. Die Färbung erfolgt kontinuierlich oder diskontinuierlich. Bei kontinuierlicher Arbeitsweise kann die Fixierung der Kupferkomplexe durch Dämpfen oder Hitze erfolgen.

Unter Polyamidmaterial wird synthetisches Polyamid, wie z.B. Polyamid-6, Polyamid-6,6 oder auch Polyamid-12, verstanden. Neben den reinen Polyamidfasern kommen vor allem auch Fasermischungen aus Polyurethan und Polyamid in Betracht, so z.B. Trikotmaterial aus Polyamid/Polyurethan im Mischungsverhältnis 70 : 30. Grundsätzlich kann das reine oder gemischte Polyamidmaterial in den verschiedensten Verarbeitungsformen vorliegen, wie z.B. als Faser, Garn, Gewebe oder Gewirke.

Vor allem Polyamidmaterial, das Licht und Hitze ausgesetzt wird und z.B. als Autopolsterstoff oder Teppiche vorliegt, eignet sich besonders gut dazu, nach dem vorliegenden Verfahren behandelt zu werden.

Die Färbung erfolgt in üblicher Weise z.B. mit Metallkomplexfarbstoffen oder auch mit Anthrachinonfarbstoffen oder Azofarbstoffen. Als Metallkomplexfarbstoffe werden die bekannten Typen, insbesondere die 1 : 2-Chrom- oder 1 : 2-Kobaltkomplexe von Mono- oder Disazo- oder -azomethinfarbstoffen eingesetzt, die in der Literatur in grosser Zahl beschrieben sind. Neben diesen kommen natürlich auch Farbstoffe aus anderen Farbstoffklassen in Frage, wie z.B. Dispersions- oder auch Küpenfarbstoffe.

Die folgenden Herstellungsvorschriften und Beispiele dienen der Veranschaulichung der Erfindung. Teile bedeuten Gewichtsteile und Prozente Gewichtsprozente. Die Prozentangaben betreffend die Zusätze der einzelnen Behandlungs- bzw. Färbebäder beziehen sich, wenn nicht anders vermerkt, auf das Fasermaterial. Die Temperaturen sind in Grad Celsius angegeben.

Herstellungsvorschriften bekannter Verbindungen

Vorschrift A:

3 g Ethylendiamin werden zu einer Lösung von 12,2 g Salicylaldehyd in 50 ml Ethanol gegeben. Man rührt noch 15 Minuten und saugt den ausgefallenen Niederschlag ab. Man erhält 12,7 g (94% d.Th.) gelbe Blättchen vom Schmelzpunkt 130–131° der Formel

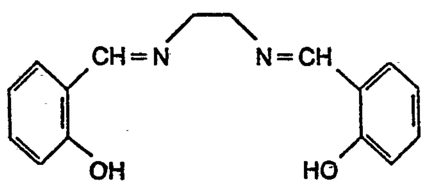
(101)

Zu 2,68 g dieser Verbindung, gelöst in 20 ml Dimethylformamid gibt man eine unter leichtem Erwärmen hergestellte Lösung von 1,99 g Kupfer-II-acetat-monohydrat in 50 ml Dimethylformamid. Man rührt noch 15 Minuten, saugt vom ausgefallenen Niederschlag ab und wäscht mit wenig Dimethylformamid und Ethanol nach. Man erhält 2,8 g (86% d.Th.) der Verbindung der Formel

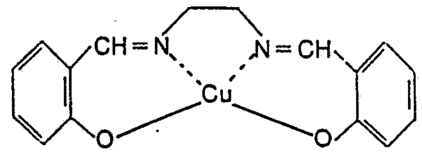
(102)

in Form dunkeloliver, glänzender Kristalle vom Schmelzpunkt 324° (Zers.).

Vorschrift B:

Zu einer Lösung von 4,02 g 5-Brom-2-hydroxybenzaldehyd in 20 ml Dimethylformamid gibt man 0,6 g Ethylendiamin zu, wobei rasch die bifunktionelle Schiffsche Base als gelber Niederschlag ausfällt. Man setzt dann eine Lösung von 2 g Kupfer-II-acetat-monohydrat in 20 ml Dimethylformamid zu, rührt noch 8 Stunden, saugt ab und wäscht den Niederschlag mit Dimethylformamid und abs. Ethanol. Nach dem Trocknen erhält man 4,69 g (96% d.Th.) einer graugrünen Festsubstanz vom Schmelzpunkt 301–302° (Zers.) der Formel

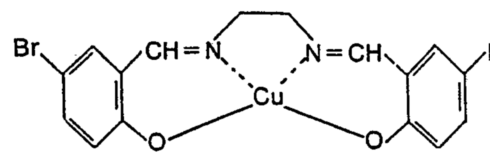
(103)

Vorschriften C–I:

Arbeitet man wie in den Vorschriften A oder B beschrieben, verwendet jedoch die in der folgenden Tabelle I verzeichneten Aldehyde und Diamine, so erhält man die analogen Kupferkomplexe in ähnlichen Ausbeuten.

Tabelle I

| Vorschrift | Aldehyd | Diamin |
|---|---|---|
| C | 5-Chlor-2-hydroxybenzaldehyd | Ethylendiamin |
| D | 2-Hydroxy-1-naphthaldehyd | Ethylendiamin |
| E | 2-Hydroxybenzaldehyd | 1-Phenyl-ethylendiamin |
| F | 3-Methyl-2-hydroxybenzaldehyd | Ethylendiamin |
| G | 5-Methyl-2-hydroxybenzaldehyd | Ethylendiamin |
| H | 5-tert. Butyl-2-Hydroxybenzaldehyd | Ethylendiamin |
| I | 2,4-Dihydroxybenzaldehyd | Ethylendiamin |

Vorschrift J:

Zu 200 ml 2n Natronlauge gibt man bei 85° nacheinander unter Rühren 48,8 g 2-Hydroxybenzaldehyd, 12 g Ethylendiamin und dann eine 85° warme Lösung von 49,9 g Kupfer-II-sulfat-pentahydrat in 200 ml Wasser. Man lässt unter Rühren auf Raumtemperatur (15–25°) abkühlen, saugt ab, wäscht den Filterrückstand sulfatfrei und erhält nach Trocknen bei 70° unter vermindertem Druck (ca. 100 Torr) als dunkelolivfarbene Festsubstanz 62,5 g (94,8% d.Th.) der Verbindung der Formel (102).

Vorschriften K–P:

Verfährt man wie in Vorschrift B angegeben, setzt jedoch die in der nachfolgenden Tabelle II bezeichneten Aldehyde und Diamine ein, so erhält man die analogen Kupferkomplexe in ähnlichen Ausbeuten:

Tabelle II

| Vorschrift | Aldehyd | Diamin |
|---|---|---|
| K | 5-Chlor-2-hydroxy-benzaldehyd | Ethylendiamin |
| L | 5-Brom-2-hydroxy-benzaldehyd | Ethylendiamin |

Tabelle II (Fortsetzung)

| Vorschrift | Aldehyd | Diamin |
|---|---|---|
| M | 2-Hydroxy-1-naphthylaldehyd | Ethylendiamin |
| N | 2-Hydroxybenzaldehyd | Methyl-ethylendiamin |
| O | 2-Hydroxybenzaldehyd | 1,2-Cyclohexylendiamin |
| P | 2-Hydroxybenzaldehyd | 1-Phenyl-ethylendiamin |

Vorschrift Q

Zu einer Lösung von 4,87 g N,N'-Bis [1-(2-hydroxy-phenyl)-propyliden]-enthylendiamin (hergestellt aus 1 Mol Ethylendiamin und 2 Mol 2-Hydroxypropionphenon) in 50 ml Dimethylformamid gibt man bei 60 °C eine warme Lösung von 3 g Kupfer-II-acetat-monohydrat in 50 ml Dimethylformamid. Man lässt abkühlen, saugt den Niederschlag ab, wäscht nach und erhält nach dem Trocknen als violettrote Nädelchen (Schmelzpunkt 280–281 °C) 4,6 g (80% d.Th.) der Verbindung der Formel (1), worin $A^1$ für Ethyl und $R^1$, $R^2$, $R^3$, $R^4$, $X^1$ und $Y^1$ für Wasserstoff stehen.

Herstellungsbeispiele neuer Verbindungen

Beispiel 1:

4,2 g N,N'-Bis (6-hydroxy-2,5-dimethyl-benzyliden)-ethylendiamin (hergestellt aus 1 Mol Ethylendiamin und 2 Mol 3,6-Dimethyl-2-hydroxybenzaldehyd) werden in der Hitze in 150 ml Äthanol und 50 ml Dimethylformamid gelöst. Man gibt eine heisse Lösung von 2,58 g Kupfer (II)-acetat-monohydrat in 100 ml Äthanol zu, lässt unter Rühren abkühlen, saugt ab und erhält nach dem Trocknen als rosaviolettfarbene Blättchen (Schmelzpunkt >340°) 4,72 g (91,4% d.Th.) der Verbindung der Formel (1),
worin $R^1$ und $R^4$ Methyl und $A^1$, $R^2$, $R^3$, $X^1$ und $Y^1$ für Wasserstoff stehen.

Beispiel 2:

Man verfährt wie in Beispiel 1 angegeben, setzt jedoch 4-Methyl-2-hydroxy-benzaldehyd als Ausgangskomponente bei der Herstellung der Schiffschen Base ein. Man erhält in ähnlicher Ausbeute als olivfarbene Festsubstanz die Verbindung der Formel (1), worin $R^3$ für Methyl und $A^1$, $R^1$, $R^2$, $R^4$, $X^1$ und $Y^1$ für Wasserstoff stehen.

Beispiel 3:

Man verfährt wie in Beispiel 1 angegeben, setzt jedoch 4-Methoxy-2-hydroxy-benzaldehyd als Ausgangskomponente für die Herstellung der Schiffschen Base ein. Man erhält in ähnlicher Ausbeute als olivfarbene Blättchen eine Verbindung der Formel (1), worin $R^3$ für Methoxy und $A^1$, $R^1$, $R^2$, $R^4$, $X^1$ und $Y^1$ für Wasserstoff stehen.

Beispiel 4:

1,5 g Ethylendiamin werden zu einer Suspension von 9,66 g 4-Diäthylamino-2-hydroxybenzaldehyd in 20 ml Ethanol gegeben. Man kocht 1 Stunde am Rückfluss, lässt abkühlen, saugt ab und erhält nach Trocknen als hellgelbe, an sich neue Substanz (Schmelzpunkt: 137–138°) 8,15 g (77% d.Th.) der Schiffschen Base der Formel

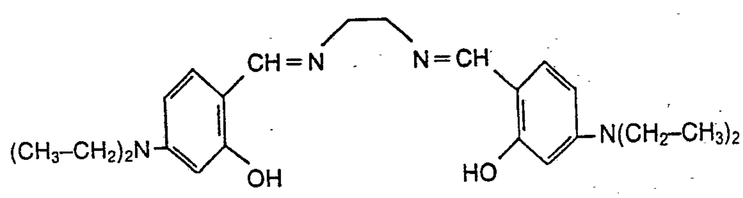

(104)

Hierauf wird eine Lösung von 3 g Kupfer-II-acetat-Monohydrat in 100 ml warmem Ethanol zu einer Lösung von 6,15 g der Schiffschen Base der Formel (104) in 100 ml warmen Ethanol gegeben. Nach 30 Min. Rühren saugt man ab. Der Filterrückstand wird während 30 Min. mit 30 ml 1 n Natronlauge und 20 ml Ethanol verrührt, abgesaugt, mit Wasser neutralgewaschen und getrocknet. Man erhält als dunkelgraue, feinkristalline Substanz (Schmelzpunkt 135–136° (Zers.)) 6,9 g (93% d.Th.) der Verbindung der Formel (1), worin $R^3$ für Diethylamino und $A^1$, $R^1$, $R^2$, $R^4$, $X^1$ und $Y^1$ für Wasserstoff stehen. Die Substanz enthält nach Elementaranalyse 1 Mol Kristallwasser.

Beispiel 5:

Man verfährt, wie in Vorschrift B angegeben, setzt jedoch 3,5-Dichlor-2-hydroxybenzaldehyd ein. Man erhält in ähnlicher Ausbeute als violettrosafarbene Festsubstanz die Verbindung der Formel (1), worin $R^2$ und $R^4$ für Chlor und $A^1$, $R^1$, $R^3$, $X^1$ und $Y^1$ für Wasserstoff stehen.

Beispiel 6:

Man verfährt wie in Vorschrift B angegeben, setzt jedoch 3-Methoxy-3-hydroxybenzaldehyd ein. Man erhält in ähnlicher Ausbeute als türkisfarbene Blättchen die Verbindung der Formel (1), worin $R^4$ für Methoxy und $A^1$, $R^1$, $R^2$, $R^3$, $X^1$ und $Y^1$ für Wasserstoff stehen.

Beispiel 7:

Zu einer Suspension von 7,24 g des Kupferkomplexes gemäss Vorschrift I in 300 ml Ethanol gibt man bei 80° unter Rühren 5,32 g 30%ige Natronlauge (verdünnt mit 30 ml Ethanol) zu. Man lässt

abkühlen, saugt den Niederschlag ab und wäscht mit Ethanol nach. Man erhält nach dem Trocknen 7,4 g (77% d.Th.) des entsprechenden, an sich neuen Natriumsalzes als dunkelviolettfarbene, fein kristalline Substanz, die nach Elementaranalyse und acidimetrischer Titration 6 Mol Kristallwasser enthält. Zu einer Suspension von 22,4 g des so erhaltenen Dinatriumsalzes in 300 ml Dimethylformamid werden hierauf 25,8 g 2-Methoxyäthyl-tosylat gegeben. Man rührt 70 Min. bei 140°. Nach Abkühlen giesst man unter Rühren in 1,5 Liter Wasser ein, saugt den Niederschlag ab und wäscht nach. Der Filterrückstand wird 1 Stunde lang mit 100 ml 1 n Natronlauge verrührt, abgesaugt, neutral gewaschen und getrocknet. Man erhält als helltürkisfarbene Substanz (Schmelzpunkt 132–135°) 16,45 g (58% d.Th.) des Kupferkomplexes, welche nach Elementaranalyse 2 Mol Kristallwasser enthält und der Formel (1) entspricht, worin $R^3$ für Methoxyethoxy und $A^1$, $R^1$, $R^2$, $R^4$, $X^1$ und $Y^1$ für Wasserstoff stehen.

Beispiel 8:

Man verfährt wie in Beispiel 7 angegeben, setzt jedoch 2-[(2-Ethoxy)-ethoxy]-ethyl-tosylat ein. Man erhält in ähnlicher Ausbeute als helltürkisfarbene Festsubstanz die Verbindung der Formel (1), worin $R^3$ für Ethoxyethoxyethoxy und $A^1$, $R^1$, $R^2$, $R^4$, $X^1$ und $X^1$ für Wasserstoff stehen.

Applikationsbeispiele

Beispiel 9:

5 g der gemäss Vorschrift A hergestellten Verbindungen werden mit 5 g des Kondensationsproduktes aus Naphthalinsulfonsäure und Formaldehyd als Dispergator, das in 7,5 ml Wasser gelöst ist, mit 20 g Quarzkügelchen (Druchmesser ca. 1 mm) versetzt und mit einem Rührer mit ca. 1600 Umdrehungen pro Minute so lange gemahlen, bis die Teilchengrösse unter 2 µm liegt. Die Dispersion wird von den Quarzkügelchen mittels eines feinen Maschensiebes abgetrennt und mit Wasser auf 20% an Wirksubstanz eingestellt.

Das Einrühren von 0,3% Carboxymethylcellulose bewirkt eine Stabilisierung der Dispersion.

In der gleichen Weise lassen sich aus den Verbindungen der Vorschriften B–Q und der Beispiele 1–8 stabile Dispersionen herstellen.

Beispiel 10:

Drei Stücke eines Nylon 66-Autopolstertrikots von 15 g werden in einem Färbeapparat mit offenen Behandlungsbädern, mit Flotten (Flottenverhältnis 1 : 25) behandelt, die 2% Ammoniumsulfat, 0,2% des Farbstoffes der Formel (jeweils auf das Fasergewicht berechnet):

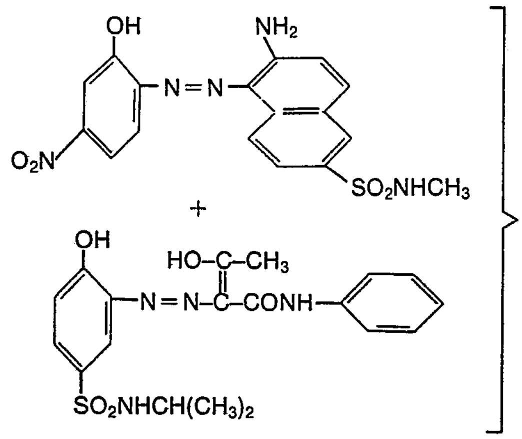

1:2 Co-Mischkomplex (105)

sowie 0,35% der gemäss Beispiel 9 erhaltenen nass gemahlenen Dispersion der Verbindungen gemäss den Vorschriften A oder C enthalten. Als Vergleich dient eine Färbung ohne Zusatz dieser Verbindungen. Die Behandlung erfolgt zunächst bei 50° während 5 Minuten, sodann wird die Temperatur mit 2°/min auf 95° erhöht. Es wird 30 Minuten bei dieser Temperatur behandelt, dann auf 70° abgekühlt, kalt gespült, zentrifugiert und bei 80° im Umluftschrank getrocknet. Von den Färbungen werden die Lichtechtheiten nach SN-ISO 105–BO2 (Xenon), sowie nach DIN 75.202 (prov.) (Fakra) bestimmt. Mit den Färbungen (Mustergrösse ca. 18 × 10 cm) werden weiterhin auf einer Teilfläche (ca. 18 × 4,5 cm) mit abgedeckten Seitenteilen während 250 Std. nach DIN 75.202 (prov.) Heissbelichtungen vorgenommen. Diese werden anschliessend nach SNV 198.461 auf ihre Reissfestigkeit und Dehnung geprüft.

Der Kupfergehalt des in Anwesenheit der Verbindung gemäss Vorschrift A oder C gefärbten Fasermaterials wurde mit 100 µg pro Cu pro g Fasermaterial ermittelt.

Die Lichtechtheit der Färbungen, welche in Gegenwart der Verbindungen gemäss Vorschrift A oder C hergestellt wurden, ist deutlich besser als die Lichtechtheit der Vergleichsfärbung ohne diese Verbindungen.

Ausserdem wird durch Zusatz der Verbindungen gemäss Vorschrift A oder C die Reissfestigkeit des Polyamidmaterials nach der Belichtung erheblich verbessert und die Dehnung ist grösser.

Ähnliche Ergebnisse werden erzielt, wenn man 0,35% der gemäss Beispiel 9 erhaltenen Dispersion der Verbindungen gemäss Vorschriften B oder D–Q oder Beispielen 1–8 einsetzt.

Beispiel 11:

Es wird wie im Beispiel 10 beschrieben, eine 0,2%ige Färbung mit dem Rotfarbstoff der Formel

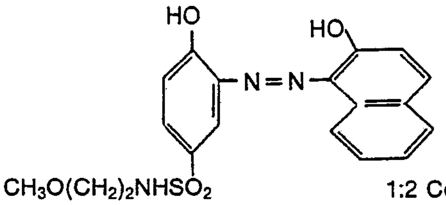

(106)

1:2 Co-Komplex

durchgeführt sowie je eine analoge Färbung, bei welcher zusätzlich 0,35% der gemäss den Angaben im Beispiel 9 erhaltenen Dispersion der Verbindungen gemäss Vorschrift A oder C anwesend sind. Auch bei dieser Färbung bewirkt der Zusatz der Cu-Komplexe gemäss Vorschrift A oder C eine deutliche Verbesserung der Lichtechtheit, der Reissfestigkeit und der Dehnung.

Der Kupfergehalt des in Anwesenheit der Verbindung gemäss Vorschrift A oder C gefärbten Fasermaterials beträgt 99 µg Cu pro g Fasermaterial.

Beispiel 12:

Wie im Beispiel 10 beschrieben, wird mit 0,1% des Farbstoffes der Formel

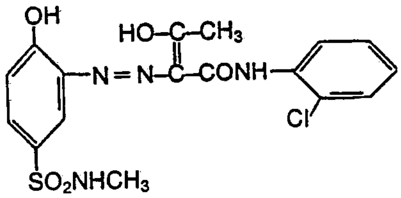

1:2 Co-Komlex

(107)

gefärbt. Das gefärbte Fasermaterial wird wie im Beispiel 10 vermerkt untersucht.

Auch bei dieser Färbung bewirkt der Zusatz der Cu-Komplexe gemäss Vorschrift A oder C eine deutliche Verbesserung der Lichtechtheit, der Reissfestigkeit und der Dehnung.

Beispiel 13:

Die gemäss Beispiel 9 formulierten Verbindungen der Vorschriften A, B oder C oder des Beispiels 6, werden auf einem Nylon-66-Filamentgarn (7–3 tex) geprüft. Dazu werden Beigefärbungen angefertigt, die wie nachfolgend beschrieben hergestellt werden.

Fünf Garnsträngchen von 10 g des Nylon-Filamentgarns werden auf einem Färbeapparat in offenen Färbebädern bei einem Flottenverhältnis von 1 : 40 behandelt. Die Färbebäder werden mit 2 g/l Ammonsulfat (pH 6,8) jeweils 0 bzw. 0,3% der gemäss Beispiel 10 hergestellten Formulierungen der Verbindungen gemäss Vorschriften A, B oder C oder des Beispiels 6, und der Farbstoffkombination (gelöst in Wasser).

0,04% Farbstoff 1 — 1:2 Co-Komplex der Formel (gelb) — (107)

0,025% Farbstoff 2

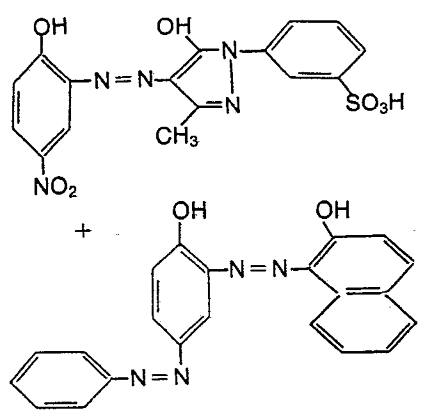

1:2 Cr-Mischkomplex (braun) — (108)

0,003% Farbstoff 3

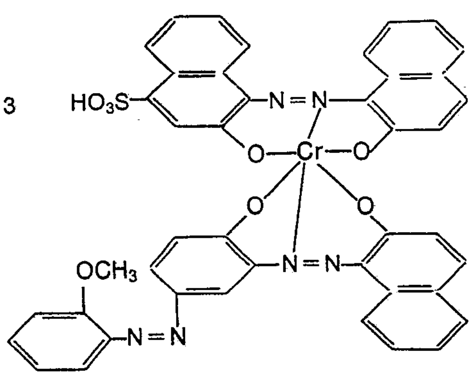

1:2 Cr-Komplex (schwarz) — (109)

beschickt. Man beginnt bei 40° zu färben und steigert die Temperatur in ca. 30 Minuten auf 95°. Man färbt 60 Minuten bei dieser Temperatur, kühlt auf 70° ab, spült, zentrifugiert und trocknet das gefärbte Garn.

Von den Färbungen wird einerseits die Lichtechtheit bestimmt nach SN-ISO 105 BO2 (Xenon) und DIN 75.202 (prov.) (Fakra), andererseits werden sie auf Karten gewickelt (30 Lagen, Einspannlänge ca. 22 cm) und 200 Stunden nach DIN 75.202 (prov.) heissbelichtet. Danach werden nach SNV 79.461 Reissfestigkeit und Dehnung geprüft.

Der Zusatz der Verbindungen gemäss Vorschrift A, B oder C oder Beispiel 6 bewirkt bei mit den vorstehenden Farbstoffen gefärbtem Nylon-Filamentgarn eine deutliche Verbesserung der Lichtechtheit, der Reissfestigkeit und der Dehnung. Dies gilt auch für die Verbindungen gemäss Vorschriften D–Q oder Beispiel 1–5, 7 oder 8.

Beispiel 14:

Es werden vier 10 g Polyamid 66-Filamentgarn-Strängchen (7 × 3 tex) zur Behandlung auf einem Garnfärbeapparat vorbereitet. Die Behandlungsbäder werden generell mit 1% Essigsäure 80% (pH 5,5) versetzt.

Das Bad Nr. 1 enthält keinen weiteren Zusatz, das Bad Nr. 2 enthält 0,35% der gemäss Beispiel 9 erhaltenen Formulierung der Verbindung gemäss Vorschrift A, das Bad Nr. 3 enthält 0,2% des Farbstoffes der Formel

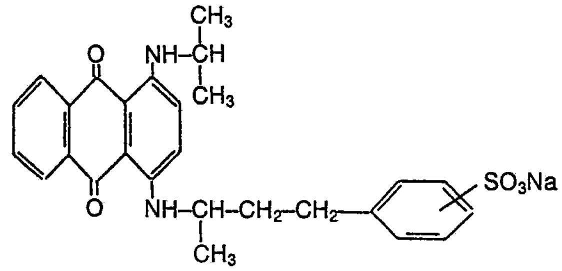

(110)

und das Bad Nr. 4 enthält 0,2% dieses Farbstoffes sowie 0,35% der gemäss den Angaben des Beispiels 9 erhaltenen Formulierung der Verbindung der Vorschrift A.

Die Behandlung erfolgt bei einem Flottenverhältnis 1 : 40 zunächst bei 50°, sodann wird die Temperatur innerhalb von 30 Minuten auf 95° erhöht und 60 Minuten behandelt. Danach wird auf 70° abgekühlt, kalt gespült, zentrifugiert und bei 80° getrocknet.

Die Prüfung der Behandlungen erfolgt wie im Beispiel 13 beschrieben.

Der Zusatz von Kupferverbindung gemäss Vorschrift A bewirkt bei den in den Bädern Nr. 2 und 4 behandelten Mustern eine deutliche Verbesserung der Reissfestigkeit und Dehnung gegenüber den ohne die Kupferverbindung behandelten Mustern. Ausserdem ist die Lichtechtheit der mit dem Bad 4 erzeugten Färbung deutlich verbessert gegenüber der mit dem Bad 3 erzeugten Färbung.

Beispiel 15:

Man verfährt wie in Beispiel 10 angegeben, färbt jedoch je 2 Stücke des Nylontrikots von 10 g mit einer Flotte bei einem Flottenverhältnis von 1 : 30, die 2% Essigsäure 80%, 0 oder 0,2% der gemäss Beispiel 9 erhaltenen Dispersion der Verbindung gemäss Vorschrift A und 0,1% des gelben Farbstoffes der Formel

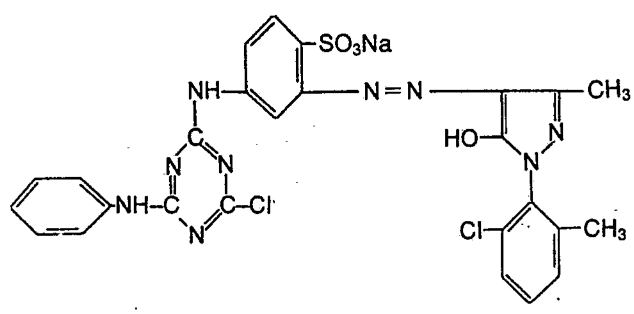

(111)

enthält. Der Zusatz der Verbindung gemäss Vorschrift A in der Färbeflotte bewirkt eine wesentliche Verbesserung der Lichtechtheit der Färbungen sowie der Reissfestigkeit und Dehnung des Polyamidmaterials nach der Belichtung. Dies gilt auch, wenn man 1,0% des Farbstoffes der Formel (111) in der Färbeflotte einsetzt. Ähnliche Ergebnisse werden auch erzielt, wenn man 0,09% des orangefarbenen Farbstoffes der Formel

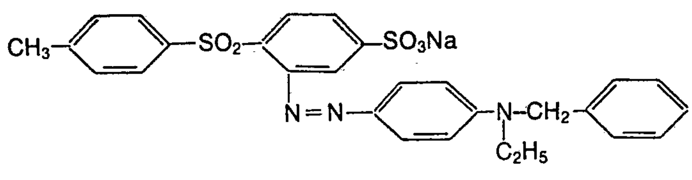

(112)

oder 0,09% des roten Farbstoffes der Formel

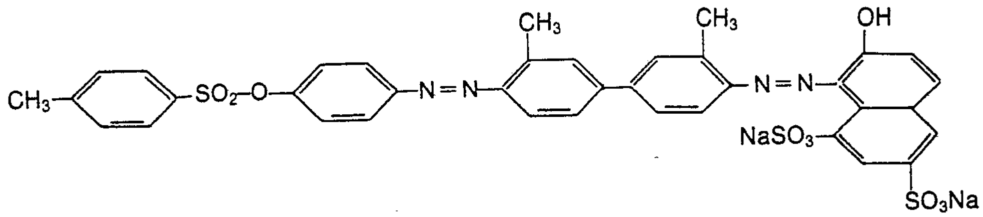

(113)

in der Färbeflotte einsetzt. Dies gilt auch, wenn man 0,9% des Farbstoffes der Formel (112) oder 0,9% des Farbstoffes der Formel (113) einsetzt.

Werden zusätzlich zur Kupferkomplexverbindung gemäss Vorschrift A oder C 0,05% des Farbstoffes der Formel

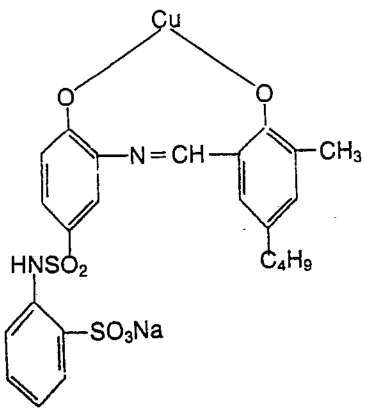

(114)

eingesetzt, so erhält man noch deutlicher verbesserte Reissfestigkeits- und Dehnungswerte bei der Färbung.

Beispiel 16:

Wie in Beispiel 10 vermerkt, werden je 3 Nylon-66-Trikotstücke von 10 g mit je 0,2% der Farbstoffe der Formel (105), (106) oder (107) gefärbt, gespült und getrocknet. Während die Serie 1 dieser Färbungen unverändert bleibt, werden die beiden Serien 2 und 3 mit einer Flotte, die ½ g/l eines nichtionischen Tensids (Addukt aus 1 Mol Nonylphenol und 9½ Mol Ethylenoxid) und 2 g/l der gemäss Beispiel 9 formulierten Verbindung der Formel (102) enthält, bei einer Flottenaufnahme von 75% foulardiert und bei 120° während 1 Minute getrocknet. Die Färbungen der Serie 2 werden bei 180° während 60 Sekunden hitzebehandelt, die der Serie 3 mit Sattdampf von ca. 100° während 5 Minuten behandelt.

Alle Färbungen werden wie in Beispiel 10 beschrieben getestet. Dabei zeigt es sich, dass die Färbungen der Serien 2 und 3 hinsichtlich Heisslichtechtheit, Reissfestigkeit und Dehnung gegenüber denjenigen der Serie 1 deutlich verbessert sind.

**Patentansprüche**

1. Verfahren zur fotochemischen Stabilisierung von synthetischem Polyamidfasermaterial oder dessen Mischungen mit anderem Fasermaterial, dadurch gekennzeichnet, dass man das Polyamidfasermaterial mit einem Kupferkomplex der Formel

(1)

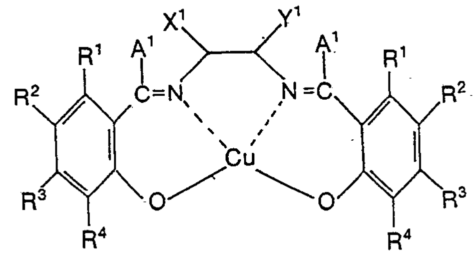

behandelt, worin

$A^1$ Wasserstoff oder $C_1$–$C_3$ Alkyl

$R^1$, $R^2$, $R^3$ und $R^4$ je Wasserstoff, Halogen, Hydroxy, Hydroxyalkyl, Alkyl, Alkoxy, Alkoxyalkoxy, Alkoxyalkoxyalkoxy, Carboxymethoxy, Alkalamino, Dialkylamino, $-SO_2NH_2$, $-SO_2NHR$ oder $-SO_2NR_2$ bedeuten, wobei R Alkyl oder Alkoxyalkyl ist und wobei unter Alkyl oder Alkoxy jeweils Gruppen mit 1–4 C-Atomen zu verstehen sind, oder

$R^1$ und $R^2$ oder $R^2$ und $R^3$ oder $R^3$ und $R^4$ zusammen mit den C-Atomen, an die sie gebunden sind, einen Benzolrest bilden,

$X^1$ und $Y^1$ je Wasserstoff, $C_1$–$C_4$-Alkyl oder einen aromatischen Rest bedeuten oder $X^1$ und $Y^1$ zusammen mit den C-Atomen, an die sie gebunden sind, einen cycloaliphatischen Rest mit 5–7 C-Atomen bilden.

2. Verfahren nach Anspruch 1, dadurch gekennzeichnet, dass man eine Verbindung der Formel

(2)

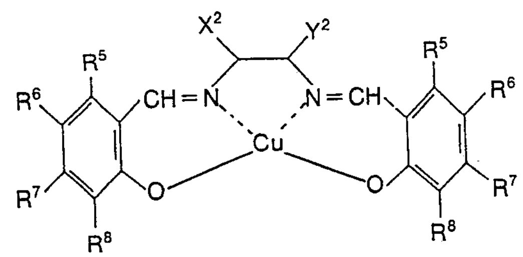

verwendet, worin

$R^5$, $R^6$, $R^7$ und $R^8$ je Wasserstoff, Hydroxy, Chlor, Brom, Methyl, tert.Butyl, Methoxy, Methoxyethoxy, Ethoxyetoxyethoxy oder Diäthylamino,

$X^2$ Wasserstoff, Methyl, Ethyl oder Phenyl und $Y^2$ Wasserstoff bedeuten

oder $R^5$ und $R^6$ zusammen einen Benzolrest oder $X^2$ und $Y^2$ zusammen einen Cyclohexylenrest bilden.

3. Verfahren nach Anspruch 2, dadurch gekennzeichnet, dass man eine Verbindung der Formel

(3) 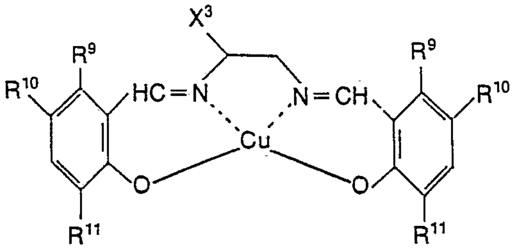

verwendet, worin

$R^9$, $R^{10}$ und $R^{11}$ je Wasserstoff, Chlor, Brom, Methyl oder Methoxy bedeuten oder $R^9$ und $R^{10}$ zusammen einen Benzolring bilden und

$X^3$ Wasserstoff, Methyl, Ethyl oder Phenyl ist.

4. Verfahren nach Anspruch 3, dadurch gekennzeichnet, dass man eine Verbindung der Formel (3) verwendet, worin $R^9$, $R^{10}$, $R^{11}$ und $X^3$ für Wasserstoff stehen.

5. Verfahren nach einem der Ansprüche 1 bis 4, dadurch gekennzeichnet, dass man den Kupferkomplex direkt dem Färbebad zusetzt.

6. Verfahren nach Anspruch 5, dadurch gekennzeichnet, dass man den Kupferkomplex in einer Menge einsetzt, dass auf 1 g Polyamid 5 bis 200 µg Kupfer kommen.

7. Verfahren nach Anspruch 5, dadurch gekennzeichnet, dass man Fasermischungen aus Polyamid und Polyurethan einsetzt.

## Claims

1. A process for photochemical stabilisation of synthetic polyamide fibre material or a mixture thereof with another fibre material, which comprises treating the polyamide fibre material with a copper complex of the formula

(1) 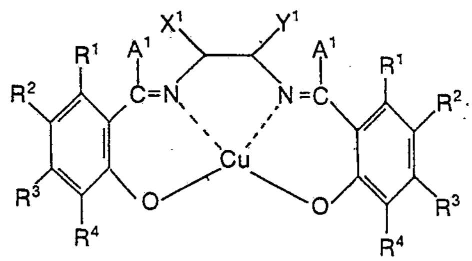

in which $A^1$ is hydrogen or $C_1$–$C_3$alkyl, $R^1$, $R^2$, $R^3$ and $R^4$ are each hydrogen, halogen, hydroxyl, hydroxyalkyl, alkyl, alkoxy, alkoxyalkoxy, alkoxyalkoxyalkoxy, carboxymethoxy, alkylamino, dialkylamino, $-SO_2NH_2$, $-SO_2NHR$ or $-SO_2NR_2$, in which R is alkyl or alkoxyalkyl and alkyl or alkoxy is in each case to be understood as a group with 1–4 C atoms, or $R^1$ and $R^2$ or $R^2$ and $R^3$ or $R^3$ and $R^4$, together with the C atoms to which they are bonded, form a benzene radical, and $X^1$ and $Y^1$ are each hydrogen, $C_1$–$C_4$alkyl or an aromatic radical, or $X^1$ and $Y^1$, together with the C atoms to which they are bonded, form a cycloaliphatic radical with 5–7 C atoms.

2. Te process according to claim 1, wherein a compound of the formula

(2) 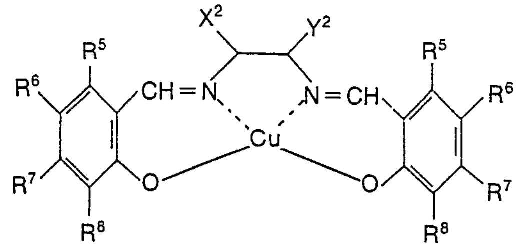

in which $R^5$, $R^6$, $R^7$ and $R^8$ are each hydrogen, hydroxyl, chlorine, bromine, methyl, tert-butyl, methoxy, methoxyethoxy, ethoxyethoxyethoxy or diethylamino, $X^2$ is hydrogen, methyl, ethyl or phenyl and $Y^2$ is hydrogen, or $R^5$ and $R^6$ together form a benzene radical, or $X^2$ and $Y^2$ together form a cyclohexylene radical, is used.

3. The process according to claim 2, wherein a compound of the formula

(3) 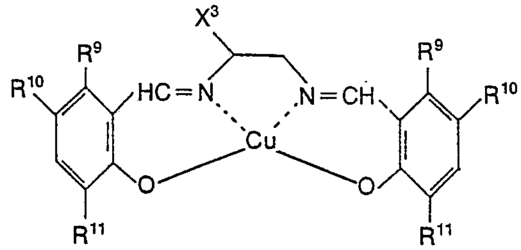

in which $R^9$, $R^{10}$ and $R^{11}$ are each hydrogen, chlorine, bromine, methyl or methoxy, or $R^9$ and $R^{10}$ together form a benzene ring, and $X^3$ is hydrogen, methyl, ethyl or phenyl, is used.

4. The process according to claim 3, wherein a compound of the formula (3) in which $R^9$, $R^{10}$, $R^{11}$ and $X^3$ are hydrogen, is used.

5. The process according to one of claims 1 to 4, wherein the copper complex is added directly to the dyebath.

6. The process according to claim 5, wherein the copper complex is employed in an amount such that 5 to 200 g of copper are present per 1 g of polyamide.

7. The process according to claim 5, wherein fibre mixtures of polyamide and polyurethane are used.

## Revendications

1. Procédé de stabilisation photochimique d'une matière fibreuse synthétique en polyamide, ou de ses mélanges avec une autre matière fibreuse, caractérisé en ce qu'on traite la matière fibreuse en polyamide avec un complexe de cuivre de formule

(1) 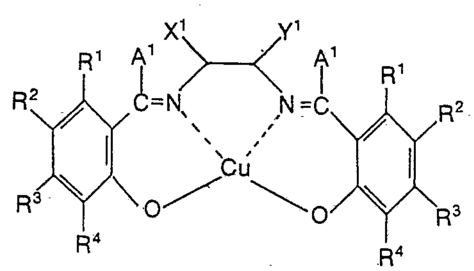

dans laquelle

$A^1$ est un hydrogène ou un radical alkyle en $C_1$–$C_3$,

$R^1$, $R^2$, $R^3$ et $R^4$ sont chacun un hydrogène, un halogène, un hydroxy, un radical hydroxyalkyle, alkyle, alcoxy, alcoxyalcoxy, alcoxyalcoxyalcoxy, carboxyméthoxy, alkylamino, dialkylamino, $-SO_2NH_2$, $-SO_2NHR$ ou $-SO_2NR_2$, où R est un radical alkyle ou alcoxyalkyle, chacun des radicaux alkyle ou alcoxy étant un radical ayant de 1 à 4 atomes de carbone, ou bien

$R^1$ et $R^2$, ou $R^2$ et $R^3$ ou $R^3$ et $R^4$, avec les atomes de carbone auxquels ils sont liés, forment un noyau benzénique,

$X^1$ et $Y^1$ sont chacun un hydrogène, un radical alkyle en $C_1$–$C_4$ ou un radical aromatique, ou bien $X^1$ et $Y^1$, avec les atomes de carbone auxquels ils sont liés, forment un radical cycloaliphatique ayant 5–7 atomes de carbone.

2. Procédé selon la revendication 1, caractérisé en ce qu'on utilise un composé de formule

(2) 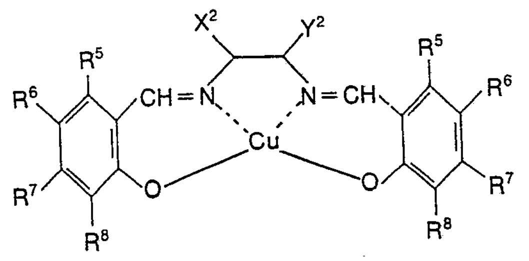

dans laquelle

$R^5$, $R^6$, $R^7$ et $R^8$ sont chacun un hydrogène ou le radical hydroxy, chloro, bromo, méthyle, tert-butyle, méthoxy, méthoxyéthoxy, éthoxyéthoxyéthoxy ou diéthylamino,

$X^2$ est un hydrogène ou le radical méthyle, éthyle ou phényle, et

$Y^2$ est un hydrogène,

ou bien $R^5$ et $R^6$, pris ensemble, forment un radical benzénique, ou bien $X^2$ et $Y^2$, pris ensemble, forment un noyau cyclohexylène.

3. Procédé selon la revendication 2, caractérisé en ce qu'on utilise un composé de formule

(3) 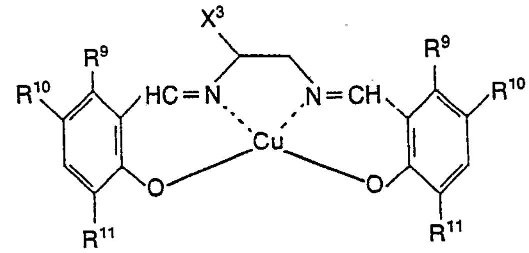

dans laquelle

$R^9$, $R^{10}$ et $R^{11}$ sont chacun un hydrogène ou le radical chloro, bromo, méthyle ou méthoxy, et $R^9$ et $R^{10}$, pris ensemble, forment un noyau benzénique, et $X^3$ est un hydrogène ou le radical méthyle, éthyle ou phényle.

4. Procédé selon la revendication 3, caractérisé en ce qu'on utilise un composé de formule (3) dans laquelle $R^9$, $R^{10}$, $R^{11}$ et $X^3$ représentent chacun un hydrogène.

5. Procédé selon l'une des revendications 1 à 4, caractérisé en ce qu'on ajoute directement le complexe de cuivre au bain de teinture.

6. Procédé selon la revendication 5, caractérisé en ce qu'on utilise le complexe de cuivre en une quantité telle que sur 1 g de polyamide soient appliqués 5 à 200 µg de cuivre.

7. Procédé selon la revendication 5, caractérisé en ce qu'on utilise des mélanges de fibres de polyamide et de polyuréthanne.